# EUROPEAN PATENT SPECIFICATION

(11) **EP 3 293 635 B1**
(45) Date of publication and mention of the grant of the patent: **17.11.2021**
(21) Application number: 17189290.4
(22) Date of filing: 04.09.2017
(51) Int. Cl.: G06F 11/14

(54) **ELECTRONIC DEVICE AND METHOD OF CONTROLLING THE SAME**
ELEKTRONISCHE VORRICHTUNG UND VERFAHREN ZUR STEUERUNG DAVON
DISPOSITIF ÉLECTRONIQUE ET SON PROCÉDÉ DE COMMANDE

(30) Priority: 07.09.2016 KR 20160114917 P; 14.04.2017 KR 20170048313 P
(43) Date of publication of application: 14.03.2018
(73) Proprietor: Ulsan National Institute of Science and Technology (UNIST), Eonyang-eup Ulju-gun Ulsan 44919 (KR)
(72) Inventor: NOH, Sam-hyuk, 44919 Ulsan (KR); MOON, Young-je, 44919 Ulsan (KR); PARK, Jae-hyeong, 44919 Ulsan (KR); SONG, Hyun-sub, 44919 Ulsan (KR); KIM, Jung-hyun, Gwangju (KR)
(74) Representative: HGF

(56) References cited:
- US-A1- 2004 006 723
- US-A1- 2007 220 356
- US-A1- 2010 077 164
- US-A1- 2013 332 660
- US-B1- 6 622 263

## Description

### CROSS-REFERENCE TO RELATED APPLICATIONS

This application claims priority from Korean Patent Application No. 10-2016-0114917 and No. 10-2017-0048313, filed on September 07, 2016 and filed on April 14, 2017, in the Korean Intellectual Property Office.

### BACKGROUND OF THE INVENTION

### Field of the Invention

Apparatuses and methods consistent with the present disclosure relate to an electronic device and a method of controlling the same, and more particularly, to an electronic device managing data using checkpointing, and a method of controlling the same.

### Description of the Related Art

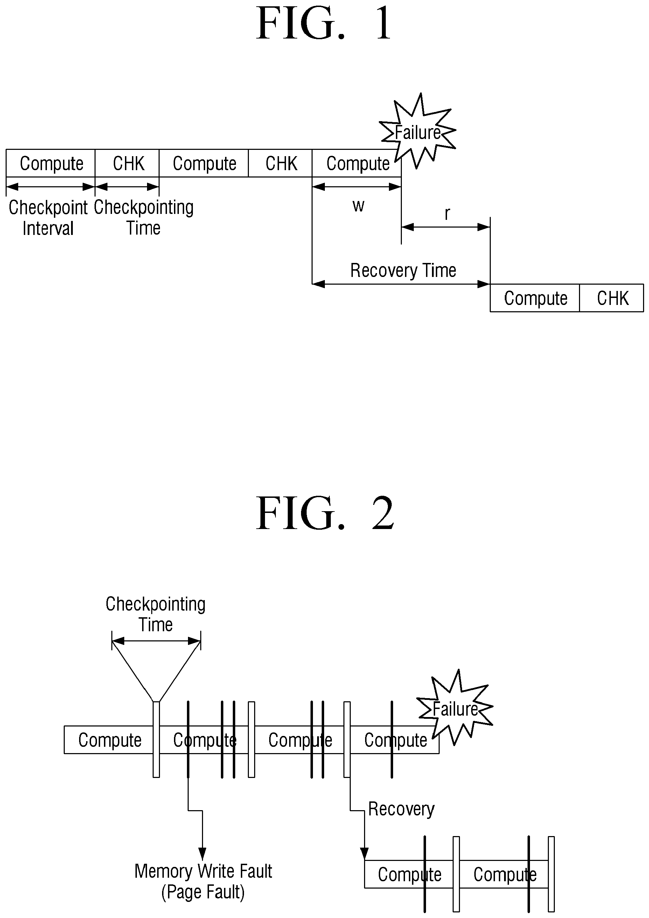

A checkpointing method is a mechanism generally used to store a consistent state to which a system returns in a storage in the case in which an unexpected error even occurs. In the checkpointing method, a state of the system is converted into a file, and the file is stored in a storage device. Referring to FIG. 1, a method of managing data using checkpointing according to the related art is illustrated. In checkpointing, a state of a system is converted into a file, and the file is stored in a storage device. In the case in which an error occurs during computing and checkpointing, an electronic device should recover a system at the most recent checkpointing and be restart the system, and a time is thus lost by w. In addition, a time r, which is a time required to recover the system at the checkpointing, is required. Therefore, in the electronic device according to the related art, a time of w+r is required from the occurrence of the error occurs up to the recovery of the system. Generally, in a high performance computing (HPC) system, a continuous computing time (or a checkpoint interval) is about three hours to four hours, and a checkpointing time is about thirty minutes to one hour. Therefore, in the electronic device according to the related art, in the case in which the error occurs, a long time is required.

In addition, in the electronic device according to the related art, all of the segment information and the volatile information of a processor and the device should be stored together in a synchronous manner, and a complicated software managing structure is thus required to ensure consistency and sustainability of data.

US 2013/332660 discloses apparatuses, systems, methods, and computer program products for hybrid checkpointed memory. A method includes referencing data of a range of virtual memory of a host. The referenced data is already stored by a non-volatile medium. A method includes writing, to a non-volatile medium, data of a range of virtual memory that is not stored by the non-volatile medium. A method includes providing access to data of a range of virtual memory from a non-volatile medium using a persistent identifier associated with referenced data and written data. US 6622263 discloses a method and apparatus for achieving system-directed checkpointing without specialized hardware assistance. US 2010/077164 discloses memory-controller-embedded apparatus and procedure for achieving system-directed checkpointing without operating-system kernel support. US 2004/006723 discloses use of non-volatile memory to perform roll back function. US 2007/220356 discloses a method for checkpointing a system already engaged in a concurrent checkpoint.

### SUMMARY OF THE INVENTION

Exemplary embodiments of the present disclosure overcome the above disadvantages and other disadvantages not described above.

The present disclosure provides an electronic device capable of providing consistency and persistency of data to secure reliability in running a system, and a method of controlling the same.

As set forth above, according to the diverse exemplary embodiment of the present disclosure, the electronic device and the method of controlling the same may improve efficiency in storing data and ensure continuity and persistency of the data.

The invention is defined by the features laid down in the independent claims 1 and 9. Further enhancements are provided by the dependent claims.

### BRIEF DESCRIPTION OF THE DRAWING FIGURES

The above and/or other aspects of the present disclosure will be more apparent by describing certain exemplary embodiments of the present disclosure with reference to the accompanying drawings, in which:
FIG. 1 is a view for describing a process of performing computing and checkpointing according to the related art;
FIG. 2 is a view for describing a process of performing computing and checkpointing according to an exemplary embodiment of the present disclosure;
FIG. 3 is a block diagram illustrating an electronic device according to an exemplary embodiment of the present disclosure;
FIG. 4 is a detailed block diagram illustrating a processor according to an exemplary embodiment of the present disclosure;
FIG. 5 is a view for describing an architecture of an electronic device according to an exemplary embodiment of the present disclosure;
FIG. 6 is a view for describing a process in which an electronic device according to an exemplary embodiment of the present disclosure stores information on processes;
FIG. 7 is a view for describing a structure in which an electronic device according to an exemplary embodiment of the present disclosure manages information on processes;
FIG. 8 is a view for describing a process in which an electronic device according to another exemplary embodiment of the present disclosure stores data and metadata;
FIG. 9 is a view for describing a process of performing computing and checkpointing according to an exemplary embodiment of the present disclosure in detail;
FIG. 10 is a flow chart illustrating a method of controlling an electronic device according to an exemplary embodiment of the present disclosure;
FIG. 11 is a flow chart for describing operations of an electronic device storing information on a specific process depending on an event according to an exemplary embodiment of the present disclosure; and
FIG. 12 is a flow chart for describing operations of an electronic device storing specific data and metadata depending on an event according to an exemplary embodiment of the present disclosure.

### DETAILED DESCRIPTION OF THE EXEMPLARY EMBODIMENTS

Hereinafter, various exemplary embodiments will be described in more detail with reference to the accompanying drawings. Exemplary embodiments mentioned in the present specification may be variously modified. A specific exemplary embodiment may be illustrated in the drawings and be described in detail in a detailed description. However, the specific exemplary embodiment illustrated in the accompanying drawings is provided only to allow various exemplary embodiments to be easily understood..

Terms including ordinal numbers such as "first", "second", and the like, may be used to describe various components. However, these components are not limited by these terms. The terms are used only to distinguish one component from another component.

It should be further understood that terms "include" or "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof. It should be understood that when one component is referred to as being "connected to" or "coupled to" another component, it may be connected directly to or coupled directly to another component or be connected to or coupled to another component with the other component interposed therebetween. On the other hand, it should be understood that when one element is referred to as being "connected directly to" or "coupled directly to" another element, it may be connected to or coupled to another element without the other element interposed therebetween.

Meanwhile, a term "module" or "~er/~or" for components used in the present specification performs at least one function or operation. In addition, a "module" or a "~er/~or" may perform a function or an operation by hardware, software, or a combination of hardware and software. In addition, a plurality of "modules" or a plurality of "~ers/~ors" except for a "module" or a "~er/~or" performed by specific hardware or performed by at least one processor may be integrated in at least one module. Singular forms are intended to include plural forms unless the context clearly indicates otherwise.

Further, when it is decided that a detailed description for the known function or configuration related to the present disclosure may obscure the gist of the present disclosure, the detailed description therefor will be abbreviated or omitted.

FIG. 2 is a view for describing a process of performing computing and checkpointing according to an exemplary embodiment of the present disclosure.

Referring to FIG. 2, an electronic device performing an update in a file system region when a page fault occurs at the time of performing computing is disclosed. The present embodiment uses a memory, and more particularly a new memory among non-volatile memories. The new memory means a memory having non-volatile characteristics, accessible in a byte unit, and having a speed that does not significantly lag behind a dynamic random access memory (DRAM). For example, the memory (e.g. new memory) may include a magnetic random access memory (MRAM), a ferroelectric RAM (FeRAM), a resistive RAM (RRAM), a spin transfer torque (SST)MRAM, a phase-change RAM (PRAM), a 3D-XPoint, or the like. The memory (e.g. new memory) may serve as a main memory and a storage according to the related art. Therefore, the electronic device according to the present disclosure has an advantage that a main memory and a storage are not separately used. In addition, the electronic device has an advantage in terms of a design space of the electronic device since one memory (e.g. new memory) is used as the main memory and the storage.

The memory (e.g. new memory) includes a main memory region and a file system region. The main memory region may serve as the main memory according to the related art used in a computing process, and the file system region may serve as the storage according to the related art in which final data are stored. The electronic device may update only data of the main memory region when it performs computing. In addition, the electronic device may move the data of the main memory region to the file system region when a specific event occurs or may periodically move the data of the main memory region to the file system region. For example, the specific event is a page fault. The page fault means a case in which a page of the main memory region overflows or a page content needs to be initialized depending on a predetermined condition. Since the electronic device according to the present disclosure moves the data of the main memory region to the file system region depending on a predetermined condition, a checkpoint time may be reduced. In addition, since the main memory region and the file system region exist in one memory (e.g. one new memory), a short time may be required to move the data from the main memory region to the file system region. As an exemplary embodiment, a continuous computing time (or a checkpoint interval) of the electronic device according to the present disclosure is about 10 seconds, and a time required for moving data at the time of a page fault and a checkpointing time is sufficiently ignorable as compared with a total processing time of the electronic device.

In addition, since the electronic device according to the present disclosure frequently moves the data of the main memory region to the file system region, even though an error occurs, data to be rolled back are relatively small. Therefore, the electronic device according to the present disclosure may significantly reduce a roll-back time as compared with the electronic device according to the related art. In addition, the electronic device according to the present disclosure may apply various manners to reduce a data moving time and ensure persistency and consistency of the data. A detailed exemplary embodiment will be described below.

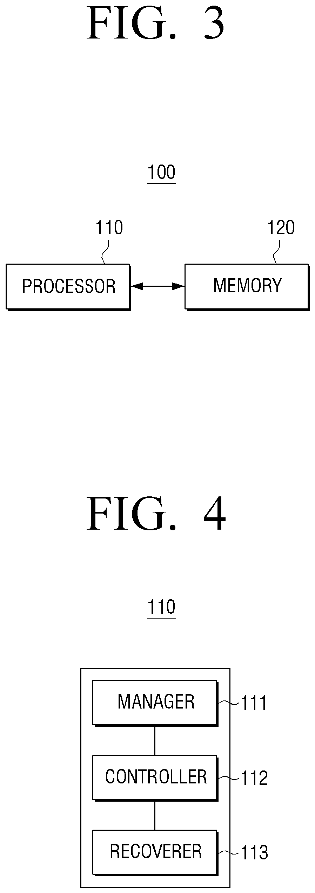

FIG. 3 is a block diagram illustrating an electronic device according to an exemplary embodiment of the present disclosure.

Referring to FIG. 3, the electronic device 100 includes a processor 110 and a memory 120. The memory 120 is a new memory including a main memory region and a file system region. As described above, the main memory region serves as the main memory according to the related art, and the file system region serves as the storage according to the related art.

In the main memory region of the memory 120, data changed in a computing process updated. In addition, the main memory region includes a checkpoint table to which information on a page in which the data are changed is written. The checkpoint table includes information on a page in which the data are changed or information on a page in which the data are copied. Although a case in which a storing unit of the memory 130 is a page is described as an exemplary embodiment of the present disclosure, the storing unit may be variously set to a byte, a word, a block, and the like.

In addition, the memory 120 includes the file system region. The file system region serves to store the data of the main memory region depending on a predetermined event or a predetermined period. The file system region includes a buffer and a file storage, and the data is stored in the buffer during a time in which the electronic device 100 performs computing and the data of the buffer is written to the storage when the computing ends or an update signal is received. For example, a case in which the computing ends or the update signal is received may be a case of performing checkpointing on the file system region.

The processor 110 performs the computing, and performs the checkpointing on the main memory region and the file system region of the memory 120 depending on a predetermined condition. When the processor 110 performs the checkpointing on the main memory region, the processor 110 initializes a checkpoint table and sets an attribute of pages of the main memory region to read-only.

In addition, the processor 110 arranges the data of the main memory region of the memory 120 and moves the data of the main memory region to the file system region, even during the computing depending on a predetermined condition. In the case in which a page fault occurs, for example, in the case in which the electronic device running out of memory, or the like, the processor 110 moves the data of the main memory region to the file system region.

A detailed block diagram of the electronic device 100 will hereinafter be described.

FIG. 4 is a detailed block diagram illustrating a processor according to an exemplary embodiment of the present disclosure.

Referring to FIG. 4, the processor 110 may include a manager 111, a controller 112, and a recoverer 113. In some cases, the processor 110 may also include only some of the manager 111, the controller 112, and the recoverer 113.

The manager 111 may decide whether or not a predefined event occurs so that checkpointing is performed. As an exemplary embodiment, the processor 111 may decide that context switching on a first process performed by the processor 110 is an event. In the following description, the context switching may indicate an operation of the electronic device storing a state of the previously performed process to switch a process performed by the processor and recovering its state to a state in which a new process may be performed. The first process may be a computing process that is currently being performed.

As another exemplary embodiment, the processor 111 may decide a case in which the context switching on the first process performed by the processor 110 is performed a predefined number of times as an event.

The controller 112 may store information on the first process at a point in time in which the event occurs in the new memory depending on a decision result. In more detail, the controller 112 may store an address on the first process as information for performing roll-back. In addition, the controller 112 may copy a task structure on the first process to the new memory using fork() function, or its like invocation. The controller 112 may update a page including the first data in a copy-on-write (CoW) manner in the task structure in the case in which a change of the first data on the first process is generated.

In addition, the controller 112 may store the latest address on the first process as information for performing the roll back in the new memory, and delete the previously stored remaining addresses. As another exemplary embodiment, the controller 112 may perform versioning on the latest address on the first process. Therefore, the controller 112 may store a plurality of addresses of a plurality of versions each corresponding to a plurality of point in times in the new memory.

As another exemplary embodiment, the controller 112 may store first data and first metadata on a point in time in which the event occurs in the file system region.

The recoverer 113 may delete second data and second metadata existing in the main memory region and roll back the first data and the first metadata, in the case in which a system error on the electronic device occurs. For example, the main memory region may be a process region. In addition, the recoverer 113 may recover the first process that is currently being performed using state information on the first process stored in the new memory.

Meanwhile, the processor may include a manager for managing a memory. In addition, the processor may include a task manager managing the main memory region and an IO manager managing the file system region.

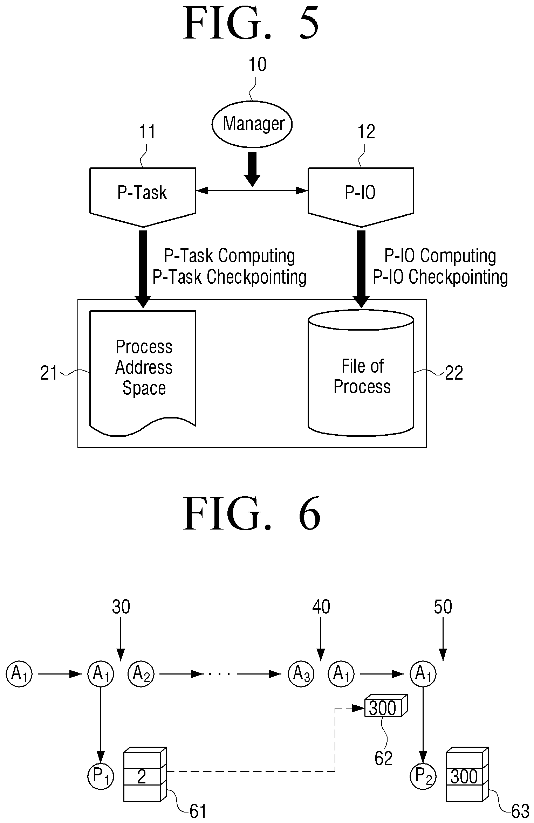

FIG. 5 is a view for describing an architecture of an electronic device according to an exemplary embodiment of the present disclosure.

Referring to FIG. 5, a manager 10, a P-task 11, a P-io 12, a memory address space 21 of a process, and a file 22 of a process are illustrated. The manager 10 may generally manage the P-task 11 and the P-io 12. The P-task 11, which is a task manager, may manage processes such as computing, checkpointing, and the like, of the main memory region. In addition, the P-io 12, which is an IO manager, may manage processes such as computing, checkpointing, and the like, of the file system region. The electronic device according to the present disclosure may use the new memory including the main memory region and the file system region to maintain persistency of the data. Therefore, as an exemplary embodiment, the task manager may be referred to as a P (persistent)-task 11, and the IO manager may be referred to as a P (persistent)-io.

A system state that needs to be stored in the memory for checkpointing may include information related to an operation region, that is, the memory address space 21 of the process and the file 22 of the process. When information on the memory address space and information on the file are stored, these information may not be stored at any position, and need to be synchronized with each other to have consistency. The manager 10 synchronizes data between the P-task 11 and the P-io 12 per checkpointing period to allow all the data to be consistent with one another. For example, the memory address space 21 of the process may be the main memory region, and the file space may be the file system region.

In detail, the P-task 11 (or the task manager) may maintain and manage consistency of the memory address space (or the main memory region) of the process. An update for the memory address space is generated only when a store instruction is executed. Therefore, the memory address space is different from the file space (or the file system region) in which write computing invokes an update (in which an update is performed at the time of the write computing). Therefore, the P-task 11 creates copies of original data before generating updates for all the store instructions. As an example, since the memory may be managed in a page unit, the copies are created in the page unit. However, the copies are not created in all the store instructions. Original data that are not corrected are data to be rolled back to due to a temporary error.

The P-io 12 (or the IO manager) may maintain and manage consistency of the file space (or the file system region). The file system region may include the buffer and the file storage. That is, updates for files are generated depending on write instructions for data or metadata. The P-io 12 may alternately perform computing and checkpointing processes like the P-task 11. Copies of original data may be created before updates with respect to all the write instructions of the computing process. However, the P-io 12 may use a mechanism similar to a mechanism of managing a buffer cache in a traditional file system. When writing is generated, the updated block is stored in the buffer, and all the subsequent reads and writes to this page may be processed in the buffer. However, contents of the buffer are not removed, but remain in the buffer until before the checkpointing is performed. The P-io 12 may flush all the pages of the buffer at a time to the storage in the checkpointing process.

The P-task 11 and the P-io 12, which are independent components, may check the operation region (or the main memory region) of the process and the file of the process, respectively. The manager 10 synchronizes the P-task 11 and the P-io 12 with each other to maintain consistency of the data. In addition, the manager 10 performs a recovery process at the time of occurrence of an error.

A method of synchronizing the P-task 11 and the P-io 12 with each other by the manager 10 will be described. The P-task 11 and the P-io 12 may alternately perform the computing and checkpointing processes. The computing process of the main memory region and the computing process of the file system region may be simultaneously performed. The checkpointing starts at a predetermined point in time. A checkpointing interval may be set by a user. The manager 10 stops a process related to an application program. When the process related to the application process is stopped, all the states of all the processes may be synchronized with one another. Then, a P-task checkpointing process may be performed, and a P-io checkpointing process may then be performed. A predetermined checkpointing sequence may allow a state of the application program to returns to a consistent state by a recovery process at the time of occurrence of an error.

In addition, the manager 10 may perform the recovery process. When the error is recovered, the electronic device needs to return the application program to the consistent state. The manager 10 may check the stored application program and perform the recovery process. In the case in which an error occurs in the computing process or the P-task checkpointing process, the application program may be recovered to the previous consistent state. That is, data may be rolled back and recovered. Alternatively, in the case in which an error occur in the P-io checkpointing process, the performed computing or the updated data have already passed through the P-task checkpointing process, and the data may thus be rolled forward. That is, in the electronic device according to the present disclosure, since all the file data exist in the buffer and it is idempotent to write the data existing in the buffer to the file storage, just writing the data existing in the buffer to the storage may maintain the consistency of the data.

FIG. 6 is a view for describing a process in which an electronic device according to an exemplary embodiment of the present disclosure stores information on processes.

FIG. 6 is an illustrative view for describing a process in which an electronic device according to an exemplary embodiment stores information on processes. Referring to FIG. 6, an electronic device creating and storing information P₁ and P₂ on a process depending on predefined events 30, 40, and 50 may be provided.
In the present exemplary embodiment, the information on processes may indicate information on a point in time in which roll-back is performed in preparation for a fault such as an abnormal end of an entire system. According to an exemplary embodiment, the predefined events 30, 40, and 50 may be implemented by context switching.
As illustrated in FIG. 6, a context may be switched from a first process A₁ to a second process A₂ depending on first context switching 30. Likewise, a context may be again switched from a third process A₃ to the first process A₁ depending on second context switching 30. However, an exemplary embodiment of the events 30, 40, and 50 illustrated in FIG. 6 is only an example for assisting in the understanding of the present disclosure, and does not restrict or limit the scopes of other exemplary embodiments. For example, a point in time in which the context switching is performed a predefined number of times may be used as the event. In detail, a point in time in which a command for performing the context switching is invoked n times may be used as the event.
A processor in the electronic device may newly perform the second process A₂ depending on the first context switching 30. However, the electronic device according to the present exemplary embodiment may pre-store the information Pi on the first process A₁ that is to be used as a roll-back point in time in preparation for a fault such as a system error. In more detail, the electronic device may create the information Pi on the first process A₁ using a fork() function, or its like. In more detail, the information P₁ may indicate an address on the first process A₁ at a point in time in which the first context switching 30 is generated.

In addition, the electronic device may create the information Pi on the first process A₁ in a manner of duplicating a task structure of the first process A₁ that is being performed. Therefore, the first process A₁ and the information Pi on the first process A₁ may be created to share the same memory space with each other.

There may be a case in which various processes are performed by the electronic device and the first process A₁ is then performed again by the second context switching 40. The electronic device may independently update only page information on a changed region from the information Pi on the first process A₁.

As an example, in the case in which a first text 61 at a point in time in which the first context switching 30 is performed is stored as 2, there may be a case in which a change for the first text 61 is generated depending on the second context switching 40. The electronic device may update data, which is 300, as a second text 62 in a copy-on-write manner with respect to the first text 61. Therefore, in the case in which third context switching is generated later, the electronic device may create information P₂ on the first process A₁ to include 300, which is a third text 63 corresponding to the same value as that of the second text 62.

The electronic device according to the present exemplary embodiment may perform checkpointing on a recent state of the process using the fork() function, or its like, and the copy-on-write manner. Therefore, the electronic device according to the present exemplary embodiment may reduce a load of an entire system, and may increase durability just by using a small amount of resources.

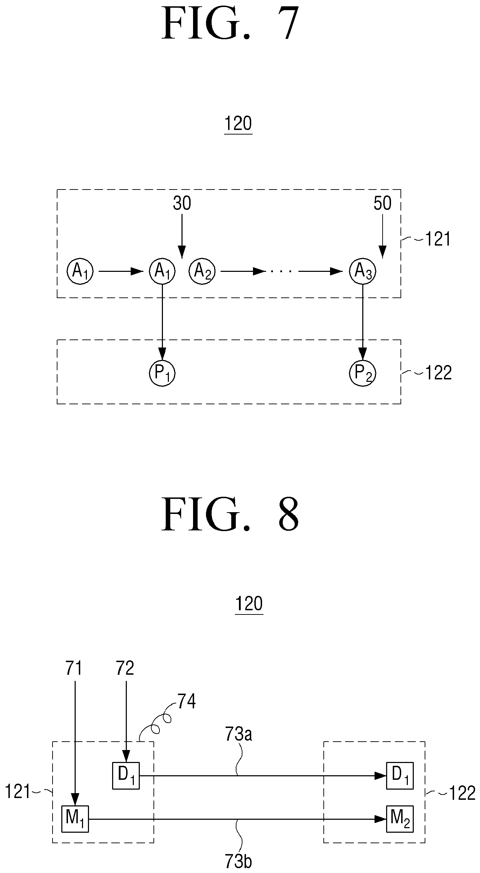

FIG. 7 is a view for describing a structure in which an electronic device according to an exemplary embodiment of the present disclosure manages information on processes.

Referring to FIG. 7, a new memory 120 included in the electronic device may include a run queue 121 and a persistency queue 122 for processes that are being performed. As an exemplary embodiment, the run queue 121 and the persistency queue 122 may be included in a main memory region of the new memory 120.

The electronic device may include the run queue 121 on a connection list in which processes performed in the new memory 120 are stored. In the present exemplary embodiment, the electronic device may manage a first process A₁, a second process A₂, and a third process A₃ using the run queue 121.

In addition, the electronic device may include the persistency queue 122 storing information on processes that are not currently executed. As an example, information Pi on the first processor A₁ may be managed using the persistency queue 122 depending on first context switching 30. The information Pi on the first process A₁ may indicate information on a state of the first process A₁ at a point in time in which the first context switching 30 is generated. As an example, in the case in which a situation such as a system error occurs in a computing system, the point in time in which the first context switching 30 is generated may be used as a reference point in time for rolling back the process.

As an example, there may be a case in which a fault of the system occurs during a time in which the first process A₁ existing in the run queue 121 is performed. In this case, the electronic device may forcibly end the process A₁ that is being performed. In addition, the electronic device may copy the information Pi on the first process A₁ pre-stored in the persistency queue 122 to the run queue 121 to again recover the first process A₁ corresponding to a roll-back point in time.

The electronic device according to the present exemplary embodiment may reduce a load of the system using non-volatile characteristics of non-volatile random access memories (NVRAMs) widely used today as the new memory, and may improve durability by storing roll-back information of the processes.

FIG. 8 is a view for describing a process in which an electronic device according to another exemplary embodiment of the present disclosure stores data and metadata.

Referring to FIG. 8, a structural view of a new memory 120 included in the electronic device according to the present exemplary embodiment is illustrated. The new memory 120 may include a main memory region 121 and a file system region 122.

In the case in which an operation of creating data or an operation 71 of modifying data is performed depending on a process that is being performed, the electronic device according to the present exemplary embodiment may update related data in first metadata M₁ existing in the main memory region 121. In addition, in the case in which an operation 72 of writing data is performed depending on the process that is being performed, the electronic device may update related data in first data D₁ existing in the main memory region 121.

The electronic device may decide whether or not a predefined event occurs so that checkpointing is performed. As an exemplary embodiment, the predefined event may indicate context switching on processes performed by the electronic device. As another exemplary embodiment, the predefined event may indicate a case in which context switching on processes performed by the electronic device is performed a predefined number of times.

The electronic device may copy (73a and 73b) both of the first data D₁ and the first metadata M₁ existing in the main memory region 121 to the file system region 122 as the predefined event occurs. In addition, the electronic device may store the copied data and metadata as second data D₂ and second metadata M₂ on a point in time in which the event occurs. The electronic device according to the present exemplary embodiment may store both of the data and the metadata in the file system region 122 in the new memory 120 depending on the predefined event.

However, in the case in which the operation of creating data or the operation 71 of modifying data or the operation 72 of writing data is generated even after the first data D₁ and the first metadata M₁ are copied (73a and 73b) to the file system region 122, the electronic device may continuously update new data and metadata as the first data D₁ and the first metadata M₁ of the main memory region.

Assume that a system error or fault occurs in the electronic device performing processes. The electronic device may forcibly end the process that is being performed, as described above in FIG. 6, and roll back and recover state information on the process. The electronic device according to the present exemplary embodiment may delete (74) the first data D₁ and the first metadata M₁ stored in the main memory region 121. In addition, the electronic device may again roll back the previous second data D₂ and second metadata M₂ stored in the file system region 122 to the main memory region 121. Therefore, data and metadata corresponding to the previous process point in time are also recovered, such that durability of the entire system may be improved.

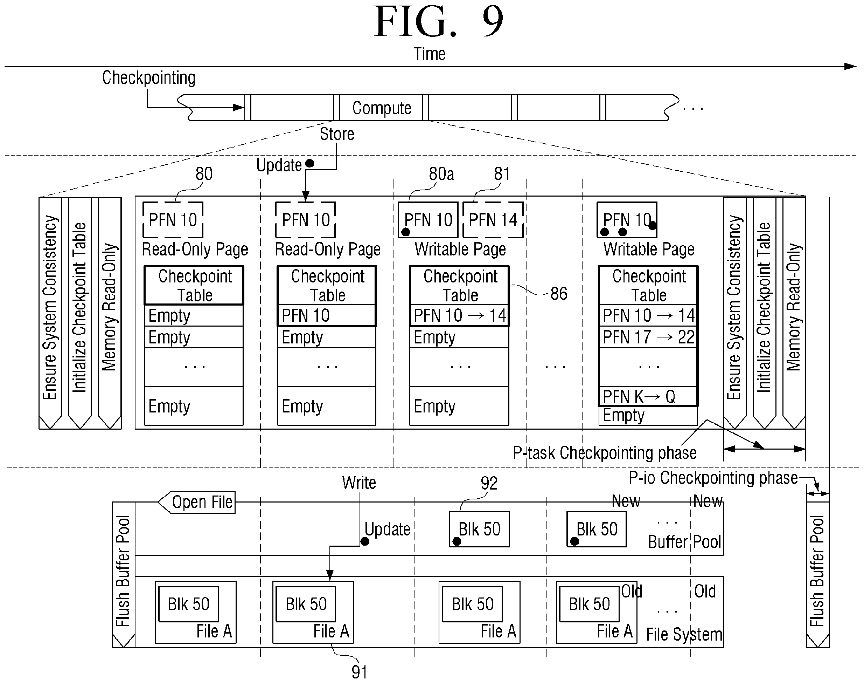

FIG. 9 is a view for describing a process of performing computing and checkpointing according to an exemplary embodiment of the present disclosure in detail.

Referring to FIG. 9, a process in which an electronic device according to the present disclosure performs computing and checkpointing is illustrated. The electronic device performs checkpointing when the previous computing process ends, and performs the next computing process.

The electronic device Performs checkpointing on a main memory region. The electronic device initializes a checkpoint table and sets a memory to read-only, when it performs the checkpointing on the main memory region. Since the memory is set to the read-only, data may be written to a page of the main memory region. Information on a page in which data are changed is written to the checkpoint table, which is a table included in the main memory region. Although a case in which a data unit is a page is described in the present exemplary embodiment, the data unit may be variously set to a byte, a word, two bytes, two words, and the like.

The electronic device Performs computing related to Page 10 80. Data of Page 10 may be updated during the computing. However, since an attribute of the memory is the read-only, the data of Page 10 80 are not changed. The electronic device writes information on a page that needs to be updated to the checkpoint table, and creates a page copied from Page 10. In FIG. 9, Page 14 80 is a page copied from the previous Page 10. In addition, the electronic device writes information on the changed page to the checkpoint table. As illustrated in FIG. 9, the checkpoint table 86 includes information indicating that Page 10 is changed into Page 14.

The electronic device changes an attribute of the memory into write. The electronic device updates Page 10. That is, the electronic device includes both of the updated Page 10 80a and the copied Page 14 81. The electronic device updates the data through the process described above.
In addition, since the electronic device includes information on the copied page and the data, in the case in which an error occurs, the electronic device may easily roll back the data using the information on the copied page. The electronic device again performs the checkpointing process on the main memory region when the computing on the main memory region ends.

Meanwhile, as described above, the electronic device needs to allow data of the main memory region and a file system region to coincide with each other. The file system region includes a buffer and a file storage. In the case in which the data of the main memory region are changed, the electronic device writes a changed block 92 to a buffer of the file system region. When the computing and the checkpointing process on the main memory region are performed, the electronic device will have an updated data block 92 in only the buffer while maintaining a data block 91 of the file storage. In the case in which an error occurs in the computing process and at the time of performing a process in the main memory region, the electronic device has only to discard the updated data block 92 stored in the buffer.

The electronic device performs a checkpointing process on the file system region when the checkpointing process on the main memory region ends. The electronic device writes the data block 92 stored in the buffer to the data block 91 of the storage when it performs the checkpointing process on the file system region. Even though an error occurs during a time in which the checkpointing process on the file system region is performed, the checkpointing process on the main memory region has already ended, and the electronic device thus writes the data block 92 stored in the buffer to the file storage. That is, the electronic device may perform roll-forward.

That is, in the case in which a data update of an original page is requested when the electronic device performs the computing, the electronic device writes information on the page to the checkpoint table. In addition, the electronic device creates a copied page copied from the page, and writes information on the copied page to the checkpoint table. In addition, the electronic device changes an attribute of the memory into the write to update data of the original page. In addition, the electronic device rolls back the original page on the basis of the information written to the checkpoint table in the case in which the error occurs when the electronic device performs the computing or performs the checkpointing on the main memory region.

Meanwhile, the electronic device includes the file system region, and the file system region includes the buffer and the file storage. The storage includes an original data block. In the case in which the data block is updated, the electronic device stores the updated data block in the buffer. In addition, the electronic device writes the updated data block to the storage when it performs the checkpointing on the file system region. As described above, the electronic device performs the checkpointing on the main memory region, and then performs the checkpointing on the file system region.

The electronic device may flush all the pages including the updated metadata and data block in the buffer to the storage when it perform the checkpointing on the file system region. That is, when the data block is updated, the electronic device may store the updated data block in the buffer and prevent the updated data block from being flushed until the checkpointing is performed. Therefore, the electronic device may have a multi-version data storing state in which new data exist in the buffer and the previous data exist in the file storage.

Meanwhile, the electronic device includes a processor, and the processor may include a processor cache (for example, a central processing unit (CPU) cache). The electronic device may flush the CPU cache between the checkpointing process of the main memory region and the checkpointing process of the file system region for the purpose of synchronization and maintenance of consistency between the main memory region and the file system region.

Up to now, the diverse exemplary embodiments for maintaining the persistency and the consistency of the data have been described. A flow chart of a method of controlling an electronic device will hereinafter be described.

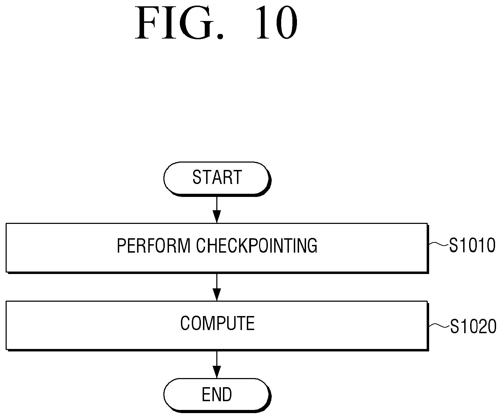

FIG. 10 is a flow chart illustrating a method of controlling an electronic device according to an exemplary embodiment of the present disclosure.

Referring to FIG. 10, the electronic device performs checkpointing (S1010). A new memory of the electronic device includes a main memory region and a file system region. Te electronic device performs checkpointing on the main memory region, and then performs checkpointing on the file system region. The main memory region includes a checkpoint table to which information on a page in which data are changed is written. In addition, the electronic device initializes the checkpoint table and set an attribute of pages of a memory to read-only, when it performs the checkpointing on the main memory region.

The electronic device performs computing (SI020). When a data update of an original page is requested, the electronic device writes information on the original page to the checkpoint table. In addition, the electronic device creates a copied page, and also writes information on the copied page to the checkpoint table. The electronic device changes the attribute of the memory into write, and update date of the original page.

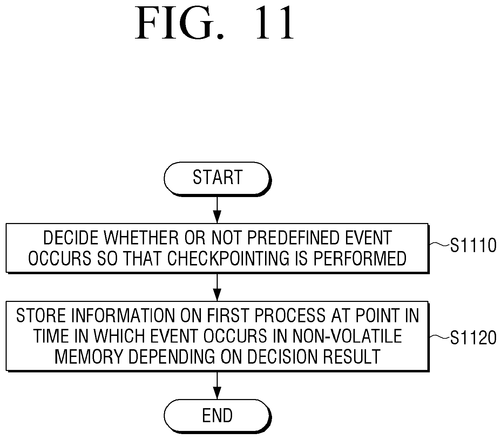

FIG. 11 is a flow chart for describing operations of an electronic device storing information on a specific process depending on an event according to an exemplary embodiment of the present disclosure.

Referring to FIG. 11, a method of performing checkpointing of an electronic device operated to increase durability of a system is illustrated. The electronic device decides whether or not a predefined event occurs so that checkpointing is performed (S1110). The checkpointing indicates an operation of the electronic device storing values corresponding to a specific point in time of changed data and metadata stored in a main memory region on a process that is being performed. The electronic device performs the checkpointing on the basis of various events depending on a predetermined condition.

The electronic device may store information on a first process at a point in time in which the event occurs in a new memory depending on a decision result (S1120). In more detail, the electronic device may store an address on the first process at the point in time in which the event occurs in the new memory. In addition, the electronic device may copy a task structure on the first process into the new memory.

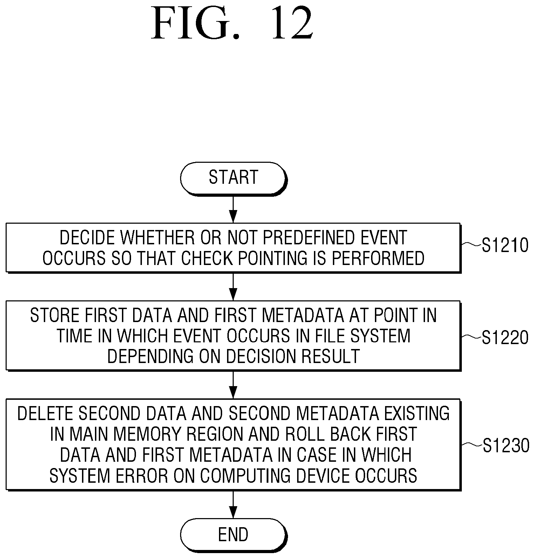

FIG. 12 is a flow chart for describing operations of an electronic device storing specific data and metadata depending on an event according to an exemplary embodiment of the present disclosure.

Referring to FIG. 12, the electronic device performing checkpointing may decide whether or not a predefined event occurs so that the checkpointing is performed (S1210). The electronic device may store first data and first metadata on a point in time in which the event occurs in a file system depending on a decision result (S1220). The electronic device may store the first data and the first metadata on the point in time in which the event occurs in the file system depending on a decision result of the previous process. In the present exemplary embodiment, metadata indicate secondary data for managing data structurally existing in a disk. The metadata may indicate data created or changed depending on creation and deletion of files, creation and deletion of directories, or an increase or a decrease in file sizes. In the present exemplary embodiment, the first data and the first metadata may indicate, respectively, data and metadata associated with a process performed at a point in time in which the event occurs.

The electronic device may delete second data and second metadata existing in a main memory region and roll back the first data and the first metadata, in the case in which a system error on the electronic device occurs. The electronic device may perform roll-back using the first data and the first metadata stored in the file system of a new memory in the case in which a system error or fault occurs. In more detail, the electronic device may delete the second data and the second metadata existing in the main memory region in the case in which the system error occurs. Therefore, the electronic device may roll back and use the previous first data and first metadata stored in the file system.

Meanwhile, the electronic device includes a non-volatile new memory and a volatile RAM, and a main memory region may be included in both of the non-volatile new memory and the volatile RAM. That is, the electronic device may include a hybrid main memory. As an exemplary embodiment, the non-volatile new memory may include a first main memory region and a file system region, and a DRAM may include a second main memory region. In addition, the DRAM may include a checkpoint table to which information on a page in which data of the second main memory region are changed is written. Meanwhile, the electronic device may include a non-volatile new memory instead of a volatile RAM.

A processor may perform computing, and perform checkpointing on the first main memory region, the second main memory region, and the file system region depending on a predetermined condition. The processor may create a first page in the DRAM, and create a second page copied from the first page in the new memory for the purpose of roll-back. The processor may initialize the checkpoint table, and set an attribute of pages of the second main memory region to read-only. When a data update on the first page of the second main memory region is requested, the processor may write information on the first page to the checkpoint table, and create the second page and write information on the second page to the checkpoint table. In addition, the processor may change the attribute of the first page into write-allowed and maintain the changed attribute up to the next checkpoint section.

The processor may remove the second page and initialize the checkpoint table to set the attribute of the first page changed into the write-allowed to read-only, when it performs the check point process. In addition, the processor may update data of the second page of the first main memory region to data of the first page of the second main memory region at the time of occurrence of an error.

Meanwhile, the file system region may include a buffer and a storage for files of the file system. The file system region may include new version data on file data and metadata updated during an operation of the system. In addition, the file system region may apply new version data blocks and metadata in the buffer to the files at the time of performing the checkpointing, and delete and roll back data in a main memory buffer at the time of occurrence of an error.

That is, the electronic device may create the first page that is frequently updated in the DRAM and create the second page existing as a back-up in the new memory using an advantage of an existing DRAM having performance better than that of the new memory to improve computing performance. The electronic device including the hybrid main memory performs operation processes similar to the abovementioned operation processes except that the main memory region is used in both of the DRAM and the new memory.

The exemplary embodiments described hereinabove may be implemented by hardware components, software components, and/or combinations of hardware components and software components. The devices, the methods, and the components described in the exemplary embodiments may be implemented using one or more general purpose computers or special purpose computers such as a processor, a controller, an arithmetic logic unit (AUL), a digital signal processor, a microcomputer, a field programmable gate array (FPGA), a programmable logic unit (PLU), a microprocessor, or any other devices that may execute instructions and respond to the instructions. A processing device may execute an operating system (OS) and one or more software applications executed on the operating system. In addition, the processing device may access, store, manipulate, process, and create data in response to execution of software. Although a case in which one processing device is used is described for convenience of understanding, it may be recognized by those skilled in the art that the process device may include a plurality of processing elements and/or plural types of processing elements. For example, the processing device may include a plurality of processors or one processor and one controller. In addition, other processing configurations such as parallel processors are also possible.

The software may include computer programs, codes, instructions, or a combination of one or more thereof, and may configure the processing device to be operated as desired or independently or collectively command the processing device to be operated as desired. The software and/or the data may be permanently or temporarily embodied in any type of machine, component, physical device, virtual equipment, computer storage medium or device, or transmitted signal wave to be interpreted by the processing device or provide instructions or data to the processing device. The software may be distributed on computer systems connected to each other by a network to be thus stored or executed in a distributed method. The software and the data may be stored in one or more non-transitory computer-readable recording media.

The non-transitory computer readable medium is not a medium that stores data therein for a while, such as a register, a cache, a memory, or the like, but means a medium that semi-permanently stores data therein and is readable by a device. In detail, various applications or programs described above may be stored and provided in the non-transitory computer readable medium such as a compact disk (CD), a digital versatile disk (DVD), a hard disk, a Blu-ray disk, a universal serial bus (USB) storage device, a memory card, a read only memory (ROM), or the like.
Although the exemplary embodiments of the present disclosure have been illustrated and described hereinabove, the present disclosure is not limited to the specific exemplary embodiments described above, but may be variously modified by those skilled in the art to which the present disclosure pertains without departing from the scope of the disclosure as claimed in the claims.

## Claims

1. An electronic device comprising:
a non-volatile memory (120) configured to include a main memory region (121) and a file system region (122); and
a processor (110) configured to perform computing and perform checkpointing on the main memory region and the file system region depending on a predetermined condition,
wherein the main memory region includes a checkpoint table (86) to which information on a page of the main memory region in which data has changed is written,
wherein the processor initializes the checkpoint table, sets an attribute of all pages of the main memory region to read-only,
wherein the processor, in the case in which a data update on the first page is requested, writes information on a first page of the main memory region to the checkpoint table, allocates in the main memory region a second page copied from the first page for the purpose of roll-back, and writes information on the second page to the checkpoint table, and changes an attribute of the first page into write and maintains the changed attribute up to the next checkpoint section,
wherein the processor removes the second page, initializes the checkpoint table, and sets the attribute of the first page changed into the write to read-only at the time of performing a checkpointing operation of the main memory
wherein the file system region includes a memory buffer and a storage for files of a file system, the memory buffer copies data blocks of the files and updates the copied data block to new version data and metadata related to changed data in the main memory region during the operation of the system when data of the main memory region are changed, and applies the updated data block including the new version data and the updated metadata to the files at the time of performing a checkpointing operation of file system region, and wherein the checkpointing operation of the main memory region is performed before the checkpointing operation of the file system region, and
wherein the processor deletes and rolls back data in the main memory region by updating data of the second page to data of the first page in the main memory region, at the time of occurrence of an error at the time of performing the computing or the checkpointing operation of the main memory region, and
wherein the processor discards updated data in the memory buffer in the file system region accumulated during a time in which the computing is performed in the main memory region.

2. The electronic device as claimed in claim 1, wherein the processor rolls back the second page to the first page in the main memory region on the basis of the information written to the checkpoint table and removes new data in the memory buffer in the file system region accumulated during a time in which the computing is when an error occurs at the time of performing the computing.

3. The electronic device as claimed in claim 1 or 2, wherein the processor rolls backs the second page to the first page on the basis of the information written to the checkpoint table in the case in which an error occurs at the time of performing the checkpointing operation of main memory region..

4. The electronic device as claimed in any one of claims 1 to 3, wherein the processor performs the checkpointing operation of main memory region depending on the predetermined condition, initializes the checkpoint table, and sets the attribute of the pages of the main memory region to the read-only.

5. The electronic device as claimed in any one of claims 1 to 4, wherein, in the case in which the data block in the memory buffer is updated, the processor stores the updated data block in the memory buffer and prevents the data block stored in the memory buffer from being flushed until the checkpointing operation of file system region is performed, the memory buffer includes the updated data block, and the file storage includes previous data block.

6. The electronic device as claimed in claim 5, wherein the processor flushes all the updated metadata and data blocks in the memory buffer to the file storage at the time of performing the checkpointing operation of the file system region.

7. The electronic device as claimed in claim 5 or 6, wherein the processor rolls forward all the updated data blocks to the file storage in the case in which an error occurs at the time of performing the checkpointing operation of file system region.

8. The electronic device as claimed in any one of claims 1 to 7, wherein the predetermined condition is at least one of a predetermined period and a condition satisfying a predetermined number of times of a change of the data.

9. A method of controlling an electronic device including a non-volatile memory (120) including a main memory region (121) and a file system region (122), comprising:
a main memory region checkpointing step of initializing a checkpoint table (86) to which information on a page of the main memory region in which data has changed is written and setting an attribute of all pages of the main memory region to read-only;
a file system region checkpointing step of performing a checkpointing operation of the file system region; and
a step of performing computing,
wherein in the step of performing the computing, in the case in which a data update on a first page of the main memory region is requested, information on the first page is written to the checkpoint table, a second page copied from the first page is allocated in the main memory region for the purpose of roll-back and information on the second page is written to the checkpoint table, and an attribute of the first page is changed into write and the changed attribute is maintained up to the next checkpoint section, and
wherein the second page is removed, the checkpoint table is initialized and the attribute of the first page is set to read-only at the time when the checkpointing step of the main region is performed
wherein the file system region includes a memory buffer and a storage for files of a file system and the memory buffer copies data blocks of the files and updates the copied data block to new version data and metadata related to changed data in the main memory region during the operation of the system when data of the main memory region are changed, and
the updated data block including the new version data and the updated metadata is applied to the files at the time of performing the checkpointing step of the file system region, andwheerin the checkponting step of the main memory region is performed before the checkpointing step of the file system region, and
wherein data in the main memory region is deleted and rolled back, by updating data of the second page to data of the first page in the main memory region, at the time of occurrence of an error at the time of performing the computing step or the checkpointing step of the main memory region, and
wherein updated data in the memory buffer of the file system region is discarded, said data being accumulated during the time in which the computing step is performed in the main memory region.

10. The method of controlling an electronic device as claimed in claim 9, wherein in the step of performing the computing, the second page is rolled back to the first page in the main memory region on the basis of the information written to the checkpoint table and new data accumulated during a time in which the computing is performed are removed in the memory buffer in the file system region when an error occurs at the time of performing the computing.

11. The method of controlling an electronic device as claimed in claim 9 or 10, wherein in the main memory region checkpointing step, the second page is rolled back to the first page on the basis of the information written to the checkpoint table in the case in which an error occurs at the time of performing checkpointing operation of main memory region.

12. The method of controlling an electronic device as claimed in any one of claims 9 to 11, wherein in the main memory region checkpointing step, the checkpointing operation of main memory region is performed on the main memory region depending on the predetermined condition, the checkpoint table is initialized, and the attribute of the pages of the main memory region is set to the read-only.

13. The method of controlling an electronic device as claimed in any one of claims 9 to 12, wherein in the file system region checkpointing step, in the case in which a data block in the memory buffer is updated, the updated data block is stored in the memory buffer and is prevented from being flushed until the checkpointing operation of file system region is performed, the memory buffer includes the updated data block, and the file storage includes previous data block.

14. The method of controlling an electronic device as claimed in claim 13, wherein in the file system region checkpointing step, all the updated metadata and data blocks in the memory buffer are flushed to the file storage at the time of performing the checkpointing operation of file system region.

15. The method of controlling an electronic device as claimed in claim 13 or 14, wherein in the file system region checkpointing step, all the updated data blocks are rolled forward to the storage in the case in which an error occurs at the time of performing the checkpointing operation of file system region.

## Patentansprüche

1. Elektronische Vorrichtung, umfassend:
einen nichtflüchtigen Speicher (120), der derart konfiguriert ist, dass er einen Hauptspeicherbereich (121) und einen Dateisystembereich (122) enthält; und
einen Prozessor (110), der dazu konfiguriert ist, an dem Hauptspeicherbereich und dem Dateisystembereich je nach einer vorbestimmten Bedingung Berechnungen durchzuführen und einen Prüfpunktvorgang durchzuführen,
wobei der Hauptspeicherbereich eine Prüfpunkttabelle (86) enthält, in die Informationen auf einer Seite des Hauptspeicherbereichs, auf der sich Daten geändert haben, geschrieben werden,
wobei der Prozessor die Prüfpunkttabelle initialisiert und ein Attribut aller Seiten des Hauptspeicherbereichs auf schreibgeschützt setzt,
wobei der Prozessor in dem Fall, in dem eine Datenaktualisierung auf der ersten Seite angefordert wird, Informationen auf einer ersten Seite des Hauptspeicherbereichs in die Prüfpunkttabelle schreibt, im Hauptspeicherbereich eine von der ersten Seite kopierte zweite Seite zum Zweck eines Zurücksetzens zuweist und Informationen auf der zweiten Seite in die Prüfpunkttabelle schreibt und ein Attribut der ersten Seite in überschreibbar ändert und das geänderte Attribut bis zum nächsten Prüfpunktabschnitt beibehält,
wobei der Prozessor die zweite Seite entfernt, die Prüfpunkttabelle initialisiert und das in überschreibbar geänderte Attribut der ersten Seite beim Durchführen einer Prüfpunktoperation des Hautspeichers auf schreibgeschützt setzt, und
wobei der Dateisystembereich einen Speicherpuffer und einen Speicher für Dateien eines Dateisystems enthält, der Speicherpuffer Datenblöcke der Dateien kopiert und den kopierten Datenblock auf neue Versionsdaten und Metadaten bezüglich geänderter Daten im Hauptspeicherbereich während des Betriebs des Systems aktualisiert, wenn Daten des Hauptspeicherbereichs geändert werden, und den aktualisierten Datenblock, der die neuen Versionsdaten und die aktualisierten Metadaten enthält, auf die Dateien beim Durchführen einer Prüfpunktoperation des Dateisystembereichs anwendet, und wobei die Prüfpunktoperation des Hauptspeicherbereichs vor der Prüfpunktoperation des Dateisystembereichs durchgeführt wird, und
wobei der Prozessor Daten im Hauptspeicherbereich löscht und zurücksetzt, indem er Daten der zweiten Seite auf Daten der ersten Seite im Hauptspeicherbereich zu dem Zeitpunkt aktualisiert, zu dem ein Fehlers beim Durchführen der Berechnungen oder der Prüfpunktoperation des Hauptspeicherbereichs auftritt, und
wobei der Prozessor aktualisierte Daten im Speicherpuffer im Dateisystembereich verwirft, die während einer Zeit gesammelt werden, in der die Berechnungen im Hauptspeicherbereich durchgeführt werden.

2. Elektronische Vorrichtung nach Anspruch 1, wobei der Prozessor die zweite Seite auf die erste Seite im Hauptspeicherbereich auf Grundlage der in die Prüfpunkttabelle geschriebenen Informationen zurücksetzt und neue Daten im Speicherpuffer im Dateisystembereich, die während einer Zeit gesammelt werden, in der die Berechnungen durchgeführt werden, entfernt, wenn beim Durchführen der Berechnungen ein Fehler auftritt.

3. Elektronische Vorrichtung nach Anspruch 1 oder 2, wobei der Prozessor die zweite Seite auf die erste Seite auf Grundlage der in die Prüfpunkttabelle geschriebenen Informationen in dem Fall zurücksetzt, in dem ein Fehler beim Durchführen der Prüfpunktoperation des Hauptspeicherbereichs auftritt.

4. Elektronische Vorrichtung nach einem der Ansprüche 1 bis 3, wobei der Prozessor die Prüfpunktoperation des Hauptspeicherbereichs je nach der vorbestimmten Bedingung durchführt, die Prüfpunkttabelle initialisiert und das Attribut der Seiten des Hauptspeicherbereichs auf schreibgeschützt setzt.

5. Elektronische Vorrichtung nach einem der Ansprüche 1 bis 4,
wobei in dem Fall, in dem der Datenblock im Speicherpuffer aktualisiert wird, der Prozessor den aktualisierten Datenblock im Speicherpuffer speichert und verhindert, dass der im Speicherpuffer gespeicherte Datenblock geleert wird, bis die Prüfpunktoperation des Dateisystembereichs durchgeführt wurde, wobei der Speicherpuffer den aktualisierten Datenblock enthält und der Dateispeicher den vorherigen Datenblock enthält.

6. Elektronische Vorrichtung nach Anspruch 5, wobei der Prozessor alle aktualisierten Metadaten und Datenblöcke im Speicherpuffer in den Dateispeicher beim Durchführen der Prüfpunktoperation des Dateisystembereichs leert.

7. Elektronische Vorrichtung nach Anspruch 5 oder 6, wobei der Prozessor alle aktualisierten Datenblöcke in den Dateispeicher in dem Fall fortschreibt, in dem ein Fehler beim Durchführen der Prüfpunktoperation des Dateisystembereichs auftritt.

8. Elektronische Vorrichtung nach einem der Ansprüche 1 bis 7, wobei die vorbestimmte Bedingung mindestens eines von einem vorbestimmten Zeitraum und einer Bedingung ist, die eine vorbestimmte Häufigkeit einer Änderung der Daten erfüllt.

9. Verfahren zum Steuern einer elektronischen Vorrichtung, die einen nichtflüchtigen Speicher (120) enthält, der einen Hauptspeicherbereich (121) und einen Dateisystembereich (122) enthält, umfassend:
einen Hauptspeicherbereich-Prüfpunktschritt zum Initialisieren einer Prüfpunkttabelle (86), in die Informationen auf einer Seite des Hauptspeicherbereichs, auf der sich Daten geändert haben, geschrieben werden, und Setzen eines Attributs aller Seiten des Hauptspeicherbereichs auf schreibgeschützt;
einen Dateisystembereich-Prüfpunktschritt zum Durchführen einer Prüfpunktoperation des Dateisystembereichs; und
einen Schritt zum Durchführen von Berechnungen,
wobei bei dem Schritt zum Durchführen der Berechnungen in dem Fall, in dem eine Datenaktualisierung auf einer ersten Seite des Hauptspeicherbereichs angefordert wird, Informationen auf der ersten Seite in die Prüfpunkttabelle geschrieben werden, eine von der ersten Seite kopierte zweite Seite im Hauptspeicherbereich zum Zweck eines Zurücksetzens zugewiesen wird und Informationen auf der zweiten Seite in die Prüfpunkttabelle geschrieben werden und ein Attribut der ersten Seite in überschreibbar geändert wird und das geänderte Attribut bis zum nächsten Prüfpunktabschnitt beibehalten wird, und
wobei die zweite Seite entfernt wird, die Prüfpunkttabelle initialisiert wird und das Attribut der ersten Seite auf schreibgeschützt gesetzt wird, wenn der Prüfpunktschritt des Hauptbereichs durchgeführt wird,
wobei der Dateisystembereich einen Speicherpuffer und einen Speicher für Dateien eines Dateisystems enthält und der Speicherpuffer Datenblöcke der Dateien kopiert und den kopierten Datenblock auf neue Versionsdaten und Metadaten bezüglich geänderter Daten im Hauptspeicherbereich während des Betriebs des Systems aktualisiert, wenn Daten aus dem Hauptspeicherbereich geändert werden, und
der aktualisierte Datenblock, der die neuen Versionsdaten und die aktualisierten Metadaten enthält, auf die Dateien beim Durchführen des Prüfpunktschritt des Dateisystembereichs angewendet wird, und wobei der Prüfpunktschritt des Hauptspeicherbereichs vor dem Prüfpunktschritt des Dateisystembereichs durchgeführt wird, und
wobei Daten im Hauptspeicherbereich gelöscht und zurückgesetzt werden, indem Daten der zweiten Seite auf Daten der ersten Seite im Hauptspeicherbereich zu dem Zeitpunkt aktualisiert werden, zu dem ein Fehler beim Durchführen des Berechnungsschritts oder des Prüfpunktschritts des Hauptspeicherbereichs auftritt, und
wobei aktualisierte Daten im Speicherpuffer des Dateisystembereichs verworfen werden, wobei die Daten während der Zeit gesammelt werden, in welcher der Berechnungsschritt in dem Hauptspeicherbereich durchgeführt wird.

10. Verfahren zum Steuern einer elektronischen Vorrichtung nach Anspruch 9, wobei beim Schritt zum Durchführen der Berechnungen die zweite Seite auf Grundlage der in die Prüfpunkttabelle geschriebenen Informationen auf die erste Seite im Hauptspeicherbereich zurückgesetzt wird und neue Daten, die beim Durchführen der Berechnungen gesammelt werden, im Speicherpuffer im Dateisystembereich entfernt werden, wenn ein Fehler beim Durchführen der Berechnungen auftritt.

11. Verfahren zum Steuern einer elektronischen Vorrichtung nach Anspruch 9 oder 10, wobei im Hauptspeicherbereich-Prüfpunktschritt die zweite Seite auf Grundlage der in die Prüfpunkttabelle geschriebenen Informationen auf die erste Seite in dem Fall zurückgesetzt wird, in dem ein Fehler beim Durchführen der Prüfpunktoperation des Hauptspeicherbereichs auftritt.

12. Verfahren zum Steuern einer elektronischen Vorrichtung nach einem der Ansprüche 9 bis 11, wobei beim Hauptspeicherbereich-Prüfpunktschritt die Prüfpunktoperation des Hauptspeicherbereichs an dem Hauptspeicherbereich je nach der vorbestimmten Bedingung durchgeführt wird, die Prüfpunkttabelle initialisiert wird und das Attribut der Seiten des Hauptspeicherbereichs auf schreibgeschützt gesetzt wird.

13. Verfahren zum Steuern einer elektronischen Vorrichtung nach einem der Ansprüche 9 bis 12, wobei beim Dateisystembereich-Prüfpunktschritt in dem Fall, in dem ein Datenblock im Speicherpuffer aktualisiert wird, der aktualisierte Datenblock im Speicherpuffer gespeichert und verhindert wird, dass er geleert wird, bis die Prüfpunktoperation des Dateisystembereichs durchgeführt wird, wobei der Speicherpuffer den aktualisierten Datenblock enthält und der Dateispeicher den vorherigen Datenblock enthält.

14. Verfahren zum Steuern einer elektronischen Vorrichtung nach Anspruch 13, wobei beim Dateisystembereich-Prüfpunktschritt alle aktualisierten Metadaten und Datenblöcke in dem Speicherpuffer beim Durchführen der Prüfpunktoperation des Dateisystembereichs in den Dateispeicher geleert werden.

15. Verfahren zum Steuern einer elektronischen Vorrichtung nach Anspruch 13 oder 14, wobei beim Dateisystembereich-Prüfpunktschritt alle aktualisierten Datenblöcke in den Speicher in dem Fall fortgeschrieben werden, in dem beim Durchführen der Prüfpunktoperation des Dateisystembereichs ein Fehler auftritt.

## Revendications

1. Dispositif électronique comprenant :
une mémoire non volatile (120) configurée pour comprendre une zone de mémoire principale (121) et une zone de système de fichiers (122) ; et
un processeur (110) configuré pour réaliser des calculs et réaliser l'établissement de points de reprise sur la zone de mémoire principale et la zone de système de fichiers en fonction d'une condition prédéfinie,
ladite zone de mémoire principale comprenant une table de points de reprise (86) dans laquelle des informations sur une page de la zone de mémoire principale dans laquelle les données ont été modifiées sont écrites,
ledit processeur initialisant la table de points de reprise, définissant un attribut de toutes les pages de la zone de mémoire principale en lecture seule,
ledit processeur, dans le cas où une mise à jour des données sur la première page est demandée, écrivant des informations sur une première page de la zone de mémoire principale dans la table de points de reprise, allouant dans la zone de mémoire principale une seconde page copiée à partir de la première page dans le but de la restauration, et écrivant des informations sur la seconde page dans la table de point de reprise, et changeant un attribut de la première page en écriture et maintenant l'attribut modifié jusqu'à la section de point de reprise suivante,
ledit processeur supprimant la seconde page, initialisant la table de points de reprise et définissant l'attribut de la première page modifié en écriture en lecture seule au moment de la réalisation d'une opération d'établissement de point de reprise de la mémoire principale
et
ladite zone de système de fichiers comprenant une mémoire tampon et un dispositif de stockage pour des fichiers d'un système de fichiers, ladite mémoire tampon copiant des blocs de données des fichiers et mettant à jour le bloc de données copié avec des nouvelles données de version et les métadonnées liées aux données modifiées dans la zone de mémoire principale durant le fonctionnement du système lorsque les données de la zone de mémoire principale sont modifiées, et appliquant le bloc de données mis à jour comprenant les nouvelles données de version et les métadonnées mises à jour aux fichiers au moment de la réalisation d'une opération d'établissement de point de reprise de la zone de système de fichiers, et ladite opération d'établissement de point de reprise de la zone de mémoire principale étant réalisée avant l'opération d'établissement de point de reprise de la zone de système de fichiers, et
ledit processeur supprimant et restaurant les données dans la zone de mémoire principale en mettant à jour les données de la seconde page avec les données de la première page dans la zone de mémoire principale, au moment de la survenue d'une erreur au moment de la réalisation du calcul ou de l'opération d'établissement de point de reprise de la zone de mémoire principale, et ledit processeur rejetant les données mises à jour dans la mémoire tampon de la zone de système de fichiers accumulées durant un temps pendant lequel le calcul est réalisé dans la zone de mémoire principale.

2. Dispositif électronique selon la revendication 1, ledit processeur restaurant la seconde page sur la première page dans la zone de mémoire principale sur la base des informations écrites dans la table de points de reprise et supprimant de nouvelles données dans la mémoire tampon dans la zone de système de fichiers accumulées durant un temps pendant lequel le calcul est lorsqu'une erreur se produit au moment de la réalisation du calcul.

3. Dispositif électronique selon la revendication 1 ou 2, ledit processeur restaurant la seconde page sur la première page sur la base des informations écrites dans la table de points de reprise dans le cas où une erreur survient au moment de la réalisation de l'opération d'établissement de point de reprise de zone de mémoire principale.

4. Dispositif électronique selon l'une quelconque des revendications 1 à 3, ledit processeur réalisant l'opération d'établissement de point de reprise de zone de mémoire principale en fonction de la condition prédéfinie, initialisant la table de points de reprise et définissant l'attribut des pages de la zone de mémoire principale en lecture seule.

5. Dispositif électronique selon l'une quelconque des revendications 1 à 4,
dans le cas où le bloc de données dans la mémoire tampon est
mis à jour, ledit processeur stockant le bloc de données mis à jour dans la mémoire tampon et empêchant le bloc de données stocké dans la mémoire tampon d'être vidé jusqu'à ce que l'opération d'établissement de point de reprise de zone de système de fichiers soit réalisée, ladite mémoire tampon
comprenant le bloc de données mis à jour, et ledit dispositif de stockage de fichiers comprenant le bloc de données précédent.

6. Dispositif électronique selon la revendication 5, ledit processeur vidant toutes les métadonnées et blocs de données mis à jour dans la mémoire tampon vers
le dispositif de stockage de fichiers au moment de la réalisation de l'opération d'établissement de point de reprise de la zone de système de fichiers.

7. Dispositif électronique selon la revendication 5 ou 6,
ledit processeur transférant tous les blocs de données mis à jour vers le dispositif de stockage de fichiers dans le cas où
une erreur survient au moment de la réalisation de l'opération d'établissement de point de reprise de la zone de système de fichiers.

8. Dispositif électronique selon l'une quelconque des revendications 1 à 7, ladite condition prédéfinie étant au moins l'une d'une période prédéfinie et d'une condition satisfaisant un nombre prédéfini de fois d'un changement des données.

9. Procédé de commande d'un dispositif électronique comprenant une mémoire non volatile (120) comprenant une zone de mémoire principale (121) et une zone de système de fichiers (122), comprenant :
une étape d'établissement de point de reprise de zone de mémoire principale, d'initialisation d'une table de points de reprise (86) dans laquelle des informations sur une page de la zone de mémoire principale dans laquelle des données ont été modifiées sont écrites et définition d'un attribut de toutes les pages de la zone de mémoire principale en lecture seule ;
une étape d'établissement de point de reprise de zone de système de fichiers, de réalisation d'une opération d'établissement de point de reprise de la zone de système de fichiers ; et
une étape de réalisation de calcul,
lors de l'étape de réalisation du calcul, dans le cas où une mise à jour de données sur une première page de la zone de mémoire principale est demandée, des informations sur la première page étant écrites dans la table de points de reprise, une seconde page copiée à partir de la première page étant allouée dans la zone de mémoire principale à des fins de restauration et des informations sur la seconde page étant écrites dans la table de points de reprise, et un attribut de la première page étant modifié en écriture et ledit attribut modifié étant conservé jusqu'à la prochaine section de point de reprise, et
ladite seconde page étant supprimée, ladite table de points de reprise étant initialisée et ledit attribut de la première page étant défini en lecture seule au moment où l'étape d'établissement de point de reprise de la zone principale est réalisée
ladite zone de système de fichiers comprenant une mémoire tampon et un dispositif de stockage pour les fichiers d'un système de fichiers et ladite mémoire tampon copiant des blocs de données des fichiers et
mettant à jour le bloc de données copié avec les nouvelles données de version et les métadonnées liées aux données modifiées dans la zone de mémoire principale durant le fonctionnement du système lorsque des données de la zone de mémoire principale sont modifiées, et le bloc de données mis à jour comprenant les nouvelles données de version et lesdites métadonnées mises à jour étant appliquées aux fichiers au moment de la réalisation de l'étape d'établissement de point de reprise de la zone de système de fichiers, et ladite étape d'établissement de point de reprise de la zone de mémoire principale étant réalisée avant l'étape d'établissement de point de reprise de la zone de système de fichiers, et
lesdites données dans la zone de mémoire principale étant supprimées et restaurées, en mettant à jour les données de la seconde page avec les données de la première page dans la zone de mémoire principale, au moment de la survenue d'une erreur au moment de la réalisation de l'étape de calcul ou de l'étape d'établissement de point de reprise de la zone de mémoire principale, et
lesdites données mises à jour dans la mémoire tampon de la zone de système de fichiers étant rejetées, lesdites données étant accumulées durant le temps pendant lequel l'étape de calcul est réalisé dans la zone de mémoire principale.

10. Procédé de commande d'un dispositif électronique selon la revendication 9, lors de l'étape de réalisation du calcul, ladite seconde page étant restaurée sur la première page dans la zone de mémoire principale sur la base que les informations écrites dans la table de points de reprise et des nouvelles données accumulées durant un temps pendant lequel le calcul est réalisé sont supprimés de la mémoire tampon dans la zone de système de fichiers lorsqu'une erreur survient au moment de la réalisation du calcul.

11. Procédé de commande d'un dispositif électronique selon la revendication 9 ou 10, dans l'étape d'établissement de point de reprise de zone de mémoire principale, ladite seconde page étant restaurée sur la première page sur la base des informations écrites dans la table de points de reprise dans le cas où une erreur survient au moment de la réalisation de l'opération d'établissement de point de reprise de zone de mémoire principale.

12. Procédé de commande d'un dispositif électronique selon l'une quelconque des revendications 9 à 11, dans l'étape d'établissement de point de reprise de zone de mémoire principale, ladite opération d'établissement de point de reprise de la zone de mémoire principale étant réalisée sur la zone de mémoire principale en fonction de la condition prédéfinie, ladite table de points de reprise étant initialisée, et ledit attribut des pages de la zone de mémoire principale étant défini en lecture seule.

13. Procédé de commande d'un dispositif électronique selon l'une quelconque des revendications 9 à 12, dans l'étape d'établissement de point de reprise de zone de système de fichiers, dans le cas où un bloc de données dans la mémoire tampon est mis à jour, ledit bloc de données mis à jour étant stocké dans la mémoire tampon et étant empêché d'être vidé jusqu'à ce que l'opération d'établissement de point de reprise de zone de système de fichiers soit réalisée, ladite mémoire tampon comprenant le bloc de données mis à jour et ledit dispositif de stockage de fichiers comprenant le bloc de données précédent.

14. Procédé de commande d'un dispositif électronique selon la revendication 13, dans l'étape d'établissement de point de reprise de zone de système de fichiers, toutes les métadonnées et tous les blocs de données mis à jour dans la mémoire tampon étant vidés vers le dispositif de stockage de fichiers au moment de la réalisation de l'opération d'établissement de point de reprise de zone de système de fichiers.

15. Procédé de commande d'un dispositif électronique selon la revendication 13 ou 14, dans l'étape d'établissement de point de reprise de zone de système de fichiers, tous les blocs de données mis à jour étant transférés vers le dispositif de stockage dans le cas où une erreur survient au moment de la réalisation de l'opération d'établissement de point de reprise de zone de système de fichiers.
